# FASCICULE DE BREVET EUROPEEN

(11) **EP 3 928 154 B1**
(45) Date de publication et mention de la délivrance du brevet: **16.08.2023**
(21) Numéro de dépôt: 20704928.9
(22) Date de dépôt: 20.02.2020
(51) Int. Cl.: G02F 1/1333, G02B 27/01, G09G 3/34, G02F 1/133

(54) **AFFICHEUR TETE HAUTE COMPRENANT UN DISPOSITIF D'AFFICHAGE AVEC PROTECTION CONTRE UNE SURCHAUFFE DE L'ECRAN**
HEAD-UP-ANZEIGE MIT EINER ANZEIGEVORRICHTUNG MIT SCHUTZ GEGEN BILDSCHIRMÜBERHITZUNG
HEAD-UP DISPLAY COMPRISING A DISPLAY DEVICE WITH PROTECTION AGAINST SCREEN OVERHEATING

(30) Priorité: 21.02.2019 FR 1901780
(43) Date de publication de la demande: 29.12.2021
(73) Titulaire: Valeo Comfort and Driving Assistance, 94000 Créteil (FR)
(72) Inventeur: GRANDCLERC, François, 94046 Créteil CEDEX (FR); DIVINE, Armand, 94046 Créteil CEDEX (FR); LE MOUNIER, Florian, 94046 Créteil CEDEX (FR); KLECKNER, Alexis, 94046 Créteil CEDEX (FR)
(74) Mandataire: Delplanque, Arnaud
(86) Numéro de dépôt international: PCT/EP2020/054557
(87) Numéro de publication internationale: WO 2020/169776

(56) Documents cités:
- EP-A1- 2 843 652
- EP-A1- 3 570 089
- FR-A1- 2 968 096
- US-A1- 2016 161 742

## Description

La présente invention concerne un dispositif d'affichage comprenant un écran à cristaux liquides pour générer une image à afficher.

Elle concerne plus particulièrement un dispositif d'affichage comprenant, en plus de l'écran à cristaux liquides, un dispositif de rétro-éclairage de l'écran, et un capteur sensible à un rayonnement infrarouge rayonné par l'écran et disposé de manière à capter une partie au moins de ce rayonnement.

Elle concerne également un afficheur tête haute muni d'un tel dispositif d'affichage, et s'applique de manière particulièrement intéressante dans un véhicule, tel qu'un véhicule automobile. L'invention revendiquée concerne un afficheur tête haute tel que défini dans la revendication 1. Des caractéristiques avantageuses sont en outre définies dans les revendications dépendantes.

Pour le conducteur d'un véhicule automobile, il est particulièrement confortable de pouvoir visualiser des informations relatives au fonctionnement du véhicule, relatives à une voie de circulation faisant face au véhicule, ou autres, sans avoir pour cela à détourner son regard de cette voie de circulation.

Il est connu dans ce but d'équiper le véhicule avec un afficheur dit tête haute, qui comprend un dispositif d'affichage tel que décrit ci-dessus. Un tel afficheur tête haute est configuré en outre pour former une image virtuelle de l'écran à cristaux liquides dans le champ visuel du conducteur, par réflexion sur le pare-brise du véhicule ou par réflexion sur un composant optique dédié, appelé combineur, disposé entre le pare-brise et les yeux du conducteur. Pour le conducteur, cette image virtuelle, qui comporte des informations à afficher, se superpose alors visuellement à l'environnement faisant face au véhicule.

Mais, avec un tel afficheur, il arrive que la lumière provenant du soleil entre dans l'afficheur, à contre-sens de la lumière provenant de l'écran, et se focalise alors sur celui-ci. Cette lumière, ajoutée à la lumière provenant d'un dispositif de rétro-éclairage de l'écran, entraine alors un échauffement important de l'écran pouvant perturber son fonctionnement, voire le dégrader irréversiblement.

Il est alors connu de détecter un échauffement de l'écran grâce au capteur précité, et en cas d'échauffement, de placer un écran occultant devant l'écran à cristaux liquides pour le protéger de la lumière provenant du soleil.

Mais les informations à afficher ne sont alors plus visibles pour le conducteur. Les documents suivants sont connus de l'art antérieur: US 2016/161742 A1 ; FR 2 968 096 A1 ; EP 2 843 652 A1. EP 3 570 089 A1 constitue un document intermédiaire pertinent.

Dans ce contexte, la présente invention propose un dispositif d'affichage tel que défini en introduction, et comprenant en outre une unité de pilotage programmée pour commander une puissance électrique d'alimentation du dispositif de rétro-éclairage, en fonction d'un signal électrique délivré par ledit capteur, de manière à ce qu'une température de l'écran déduite dudit signal reste inférieure à un seuil de température donné.

Ce dispositif permet de lutter contre un échauffement de l'écran en réduisant la puissance électrique d'alimentation du dispositif de rétro-éclairage sans nécessairement la couper totalement. L'image générée, bien que moins lumineuse, reste alors visible pour un utilisateur, et l'échauffement dû au rétro-éclairage de l'écran s'en trouve diminué.

Par ailleurs, déduire la température de l'écran à partir du signal délivré par le capteur de rayonnement infrarouge permet une mesure sans contact, à distance, de cette température. On évite ainsi l'emploi de capteurs de température, tels que des thermocouples ou des thermistances, qu'il faudrait placer sur l'écran pour mesurer sa température, et qui masqueraient alors une partie de l'image à afficher.

D'autres caractéristiques non limitatives et avantageuses du dispositif d'affichage conforme à l'invention, prises individuellement ou selon toutes les combinaisons techniquement possibles, sont les suivantes :
- l'unité électronique de pilotage est programmée pour, lorsque la température de l'écran déduite dudit signal est supérieure audit seuil de température, commander alors une extinction du dispositif de rétroéclairage ;
- l'unité électronique de pilotage est programmée pour, lorsque la température de l'écran déduite dudit signal est inférieure au seuil de température, commander alors la puissance électrique d'alimentation du dispositif de rétroéclairage de manière à ce qu'elle décroisse lorsque ladite température approche du seuil de température ;
- l'unité électronique de pilotage est programmée pour commander ladite puissance électrique en fonction de données représentatives d'une luminosité ambiante dans un environnement extérieur du dispositif d'affichage ;
- l'unité électronique de pilotage est programmée en outre pour, lorsque la température de l'écran déduite dudit signal est inférieure à une température limite, commander ladite puissance électrique à une valeur de consigne indépendante de ladite température ;
- l'unité électronique de pilotage est programmée pour, lorsque la température de l'écran déduite dudit signal est supérieure à ladite température limite et inférieure audit seuil de température, commander ladite puissance électrique de manière à ce qu'elle soit décroissante en fonction de la température et inférieure à ladite valeur de consigne ;
- le seuil de température est un seuil au-dessus duquel l'écran est endommagé irréversiblement et en dessous duquel l'écran n'est pas endommagé irréversiblement ;
- le seuil de température est compris entre 110 degrés Celsius et 130 degrés Celsius ;
- ladite température limite est comprise entre 70 degrés Celsius et 100 degrés Celsius ;
- le capteur est sensible au rayonnement infrarouge pour au moins une longueur d'onde comprise entre 6 microns et 14 microns ;
- le dispositif d'affichage comprend en outre un filtre optique disposé sur le trajet suivi par ledit rayonnement infrarouge entre l'écran et le capteur, le coefficient de transmission de ce filtre optique ayant, pour ladite longueur d'onde comprise entre 6 microns et 14 microns, une valeur supérieure à la valeur moyenne de ce coefficient de transmission dans le domaine du visible.

L'invention revendiquée concerne un afficheur tête haute comprenant un dispositif d'affichage tel que décrit ci-dessus, dans lequel, de plus,
- l'afficheur comprend un boitier ayant une ouverture de sortie, l'écran et le capteur étant situés dans le boitier, la lumière visible émise par l'écran pour afficher ladite image sortant du boitier par ladite ouverture de sortie ;
- l'afficheur comprend en outre un conduit qui s'étend de l'écran à cristaux liquides jusqu'à l'ouverture de sortie du boitier, une ouverture latérale étant formée dans une paroi latérale du conduit, le capteur étant disposé à l'extérieur du conduit, en retrait par rapport à ladite paroi latérale ; et de façon optionelle
- le capteur est disposé à l'opposé de l'écran par rapport à ladite ouverture latérale ;
- ladite partie du rayonnement infrarouge captée par le capteur traverse l'ouverture latérale du conduit avant d'atteindre le capteur ;
- ladite ouverture latérale est située plus près de l'écran que de l'ouverture de sortie du boitier ;
- le capteur est disposé au fond d'une cavité délimitée par une paroi ;
- ladite cavité débouche dans le conduit par ladite ouverture latérale ;
- la paroi de la cavité se raccorde à ladite paroi latérale du conduit ;
- d'un côté de l'ouverture latérale opposée à l'écran, la paroi de la cavité et ladite paroi latérale se raccordent l'une à l'autre en formant entre elles un angle aigu ;
- la lumière produite par le dispositif de rétroéclairage sort de l'écran sous la forme d'un faisceau lumineux centré sur un axe d'émission moyen, et un axe de mesure, qui relie le capteur à l'écran, est séparé dudit axe d'émission moyen par un angle supérieur à 30 degrés ;
- l'afficheur comprend en outre un miroir, disposé de manière à réfléchir la lumière visible émise par l'écran lors de son trajet depuis l'écran jusqu'à l'ouverture de sortie du boitier, ce miroir étant au moins partiellement transparent pour ledit rayonnement infrarouge capté par le capteur, ladite lumière visible se réfléchissant d'un côté du miroir tandis que le capteur est situé d'une autre côté du miroir ;
- ladite partie du rayonnement infrarouge captée par le capteur traverse le miroir avant d'atteindre le capteur ;
- ledit filtre optique est réalisé au moyen dudit miroir ;
- le capteur est positionné hors d'une zone d'éblouissement, ladite zone d'éblouissement étant la zone qui serait couverte par un rayonnement infrarouge entrant dans le boitier par son ouverture de sortie avec une direction de propagation opposée à la direction de la lumière visible sortant du boitier ;
- ladite zone d'éblouissement couvre l'ensemble des zones, qui dans le boitier, seraient atteintes par un rayonnement infrarouge omnidirectionnel provenant de l'extérieur du boitier et entrant dans le boitier par son ouverture de sortie.

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] représente schématiquement, vu de côté, un afficheur tête haute selon un premier mode de réalisation conforme aux enseignements de l'invention,
[Fig. 2] représente schématiquement, vu de côté, un afficheur tête haute selon un deuxième mode de réalisation conforme aux enseignements de l'invention, et
[Fig. 3] représente schématiquement l'évolution d'une puissance électrique d'alimentation d'un dispositif de rétro-éclairage de l'afficheur de la figure 1, en fonction d'une température d'un écran à cristaux liquides de cet afficheur.

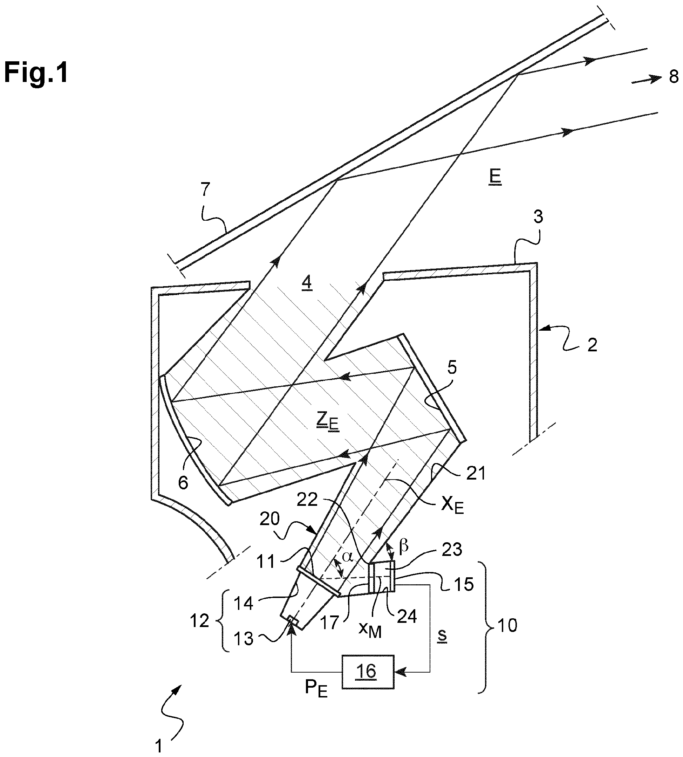

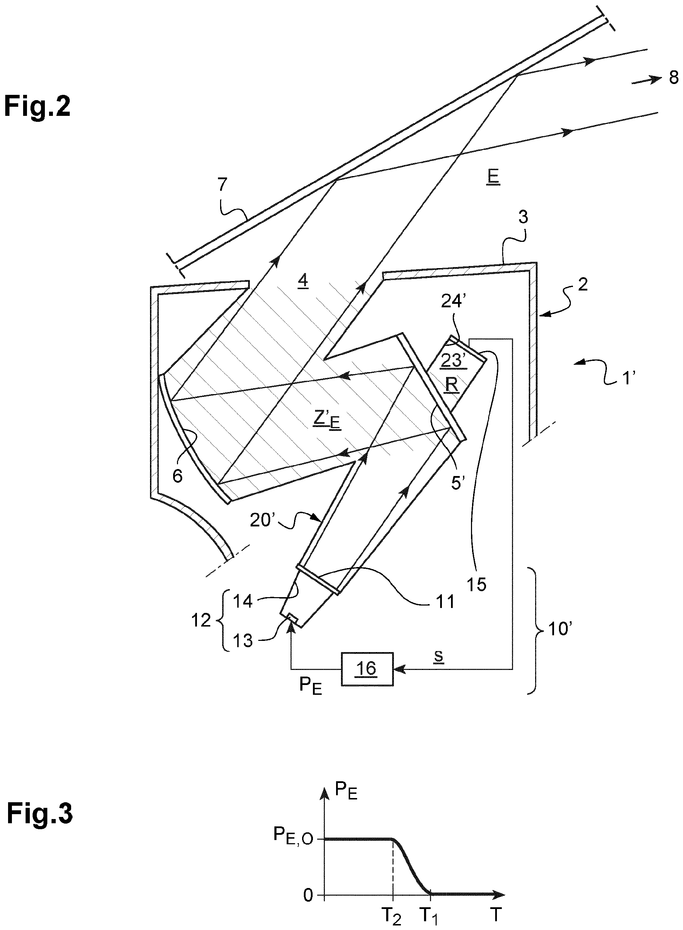

Sur les figures 1 et 2, on a représenté deux modes de réalisation d'un afficheur 1 ; 1' tête haute qui équipe un véhicule, par exemple un véhicule automobile, un bateau, un tramway ou un bus.

Dans chacun de ces modes de réalisation, l'afficheur 1 ; 1' comprend un dispositif d'affichage 10 ; 10' qui comporte un écran 11 à cristaux liquides. Cet écran permet de générer une image à afficher.

Le dispositif d'affichage 10 ; 10' comprend également un capteur 15 de rayonnement infrarouge pour mesurer à distance la température de l'écran 11 afin de détecter un échauffement éventuel de celui-ci.

La principale différence entre les deux modes de réalisation représentés respectivement sur les figures 1 et 2 concerne le positionnement du capteur 15.

D'une figure à l'autre, les éléments identiques ou similaires de ces deux modes de réalisation seront donc, dans la mesure du possible, référencés par les mêmes signes de référence et ne seront pas décrits à chaque fois.

Le dispositif d'affichage 10 ; 10' en lui-même est décrit dans un premier temps, et la structure d'ensemble de l'afficheur 1 ; 1' qu'il équipe est décrite ensuite.

Dans chacun de ces modes de réalisation, le dispositif d'affichage 10 ; 10' comprend un dispositif de rétro-éclairage 12 de l'écran 11 à cristaux liquides, en plus de cet écran 11 et du capteur 15.

Ce dispositif de rétro-éclairage 12 comprend une source de lumière 13, réalisée par exemple au moyen de diodes électroluminescentes. Il peut aussi comprendre un réflecteur 14, configuré pour guider la lumière visible produite par la source de lumière 13 jusqu'à l'écran 11.

La source de lumière 13 est alimentée électriquement par des composants électroniques de puissance qui lui fournissent une puissance électrique Pε. Ces composants électroniques de puissance sont pilotés par une unité électronique de pilotage 16 qui commande ainsi la valeur de la puissance électrique Pε alimentant la source de lumière 13. En variante, l'unité de pilotage pourrait intégrer les composants électroniques de puissance mentionnés ci-dessus.

Comme déjà indiqué, le capteur 15 qui équipe ce dispositif d'affichage 10 ; 10' permet de réaliser une mesure de la température de l'écran 11 à distance, sans contact, à partir du rayonnement infrarouge rayonné par l'écran.

Ce rayonnement infrarouge est de type thermique. Compte tenu de son origine thermique et de la température de l'écran, la puissance de ce rayonnement est contenue principalement dans la plage de longueurs d'onde comprise entre 1 micron et 15 microns. Comme la température de l'écran est comprise en pratique entre -40 degrés Celsius et 140 degrés Celsius environ, l'essentiel de la puissance de rayonnement thermique est compris plus précisément entre 6 microns et 14 microns.

Le capteur 15 est sensible à une partie au moins du rayonnement infrarouge rayonné par l'écran 11. Ainsi, le capteur 15 est sensible au rayonnement infrarouge sur une bande de longueurs d'onde qui, par exemple, couvre au moins une partie de la plage de longueurs d'onde allant de 6 microns jusqu'à 14 microns. En l'occurrence, dans les modes de réalisation décrits ici, le capteur 15 est sensible au rayonnement infrarouge sur une bande de longueurs d'onde qui s'étend de 5,5 microns jusqu'à 14 microns. Sur la bande de longueurs d'onde à laquelle il est sensible, le capteur 15 délivre un signal électrique, s, qui dépend de la puissance du rayonnement infrarouge qu'il reçoit. Ce signal s est représentatif de la puissance du rayonnement infrarouge reçu par le capteur 15 dans ladite bande de longueurs d'onde.

Le capteur 15 peut par exemple être réalisé au moyen d'un pyromètre comprenant une thermopile, ou au moyen d'une photodiode.

L'unité de pilotage 16 est programmée pour déterminer une température T de l'écran 11, à partir du signal s délivré par le capteur 15.

De manière remarquable, l'unité de pilotage 16 est programmée en outre pour commander la puissance électrique Pε d'alimentation du dispositif de rétroéclairage 12 (c'est-à-dire ici la puissance électrique Pε d'alimentation de la source de lumière 13), en fonction du signal s électrique délivré par le capteur 15, de manière à ce que la température T de l'écran 11 déduite de ce signal s reste inférieure à un seuil de température T₁ donné.

Avec ce dispositif, il est donc possible, en cas d'échauffement de l'écran 11, de réduire la puissance électrique Pε d'alimentation du dispositif de rétroéclairage 12 sans nécessairement la couper complètement. Cela permet alors de lutter contre cet échauffement tout en conservant une image visible (bien que moins lumineuse) pour un utilisateur.

L'unité électronique de pilotage 16 est programmée plus précisément pour :
- lorsque la température T de l'écran déduite du signal s est supérieure au seuil de température T₁, commander alors une extinction du dispositif de rétroéclairage 12, c'est-à-dire commander à zéro la puissance électrique Pε, et
- lorsque cette température T est inférieure au seuil de température T₁, commander alors la puissance électrique Pε d'alimentation du dispositif de rétroéclairage 12 de manière à ce qu'elle décroisse lorsque la température T approche du seuil de température T₁.

Réduire ainsi cette puissance électrique Pε avant que le seuil de température T₁ ne soit atteint permet en quelque sorte d'anticiper l'échauffement de l'écran. Cette modération progressive de la puissance électrique permet soit d'éviter une extinction du dispositif de rétro-éclairage 12, soit, si une telle extinction ne peut être évitée, de la retarder, l'image générée restant ainsi visible plus longtemps pour l'utilisateur.

Le seuil de température T₁ est un seuil au-dessus duquel l'écran 11 est endommagé irréversiblement et en dessous duquel l'écran 11 n'est pas endommagé irréversiblement. Il dépend du modèle d'écran à cristaux liquides employé, et est compris ici entre 110 degrés Celsius et 130 degrés Celsius.

Comme cela est représenté sur la figure 3, l'unité électronique de pilotage 16 est programmée pour :
- lorsque la température T de l'écran est inférieure à une température limite T₂, commander ladite puissance électrique Pε à une valeur de consigne P_{E,o} indépendante de la température T de l'écran, et
- lorsque la température T de l'écran est supérieure à ladite température limite T₂ et inférieure au seuil de température T₁, commander la puissance électrique Pε de manière à ce qu'elle soit inférieure à la valeur de consigne P_{E,o} et décroissante en fonction de la température T.

L'unité électronique de pilotage 16 peut par exemple être programmée pour que, sur la gamme de température comprise entre la température limite T₂ et le seuil de température T₁, la puissance électrique Pε décroisse continûment en fonction de la température T, par exemple de manière affine, depuis ladite valeur de consigne P_{E,o} (pour T=T₂) jusqu'à zéro (pour T=T₁). Sur cette plage de températures, l'unité électronique de pilotage 16 peut par exemple être programmée pour déterminer la valeur à laquelle commander la puissance électrique Pε en multipliant la valeur de consigne P_{E,o} par un coefficient, compris entre 0 et 1, et qui décroit avec la température T.

L'unité électronique de pilotage 16 est programmée en outre pour déterminer la valeur de consigne P_{E,o} en fonction de données représentatives d'une luminosité ambiante dans un environnement E extérieur au dispositif d'affichage. Cette valeur de consigne est par exemple déterminée de manière à être d'autant plus grande que la luminosité dans cet environnement E est grande. Cette disposition permet que l'image projetée dans l'environnement visuel du conducteur soit suffisamment lumineuse par rapport à cet environnement pour être visible pour l'utilisateur, même lorsque cet environnement est très lumineux. Cela permet par ailleurs d'éviter d'éclairer inutilement l'écran 11 à pleine puissance lorsque la luminosité ambiante dans cet environnement est plus faible.

Le seuil de température T₁ peut, comme ici, être compris entre 110 degrés Celsius et 130 degrés Celsius. Quant à la température limite T₂ à partir de laquelle commence la décroissance progressive de la puissance électrique Pε, elle est comprise par exemple entre 70 degrés Celsius et 100 degrés Celsius, dans l'exemple particulier décrit ici.

Il est noté que la puissance électrique Pε désigne ici la moyenne, sur un laps de temps compris par exemple entre 0,1 seconde et 5 secondes, d'une puissance électrique instantanée alimentant le dispositif de rétroéclairage 12. Ainsi, la valeur de la puissance électrique Pε peut être ajustée par exemple :
- en pilotant la valeur de cette puissance électrique instantanée (notamment dans le cas d'une alimentation en continu du dispositif de rétroéclairage 12), et/ou
- en alimentant le dispositif de rétroéclairage 12 de manière alternative, à une fréquence élevée, par exemple supérieure à 100 hertz, et avec un rapport cyclique réglable qui est ajusté entre 0 et 100% pour faire varier la puissance électrique Pε.

La structure d'ensemble de l'afficheur 1 ; 1' équipé de ce dispositif d'affichage 10 ; 10 peut maintenant être présentée plus en détail.

L'afficheur 1 ; 1' comprend un système optique de projection, configuré pour projeter la lumière visible émise par l'écran 11 vers une lame 7 partiellement transparente, réalisée ici au moyen du pare-brise du véhicule. Cette lame 7 réfléchit alors la lumière reçue vers les yeux 8 du conducteur du véhicule. Par transparence, celui-ci peut ainsi visualiser l'environnement du véhicule à travers la lame 7, tout en visualisant une image virtuelle de l'écran 11, formée dans cet environnement par la lame 7 et le système optique de projection.

Dans l'exemple représenté sur les figures, le système optique de projection comprend un premier miroir 5 ; 5', et un deuxième miroir 6. Le premier miroir 5 ; 5' est disposé de manière à réfléchir vers le deuxième miroir 6 la lumière visible émise par l'écran 11. Le deuxième miroir 6, qui est ici concave, est disposé de manière à réfléchir vers la lame 7 la lumière provenant du premier miroir 5 ; 5'.

En variante, le système optique de projection pourrait comprendre d'autres composants optiques, ou même être omis (auquel cas l'écran est disposé de manière à émettre ladite lumière directement vers la lame partiellement transparente).

L'afficheur 1 ; 1' comprend également un boitier 2, délimité par une paroi extérieure 3 dans laquelle est formée une ouverture de sortie 4 du boitier. La lumière visible émise par l'écran 11 sort du boitier 2 par cette ouverture de sortie 4, en direction de la lame 7 partiellement transparente.

L'afficheur 1 ; 1' comprend aussi un conduit 20 ; 20', qui s'étend de l'écran 11 à cristaux liquides jusqu'à l'ouverture de sortie 4. Le conduit comprend ici une première portion, de forme globalement tubulaire, qui s'étend de l'écran 11 jusqu'au voisinage du premier miroir 5 ; 5'. Il comprend aussi une deuxième portion, raccordée à la première portion au voisinage du premier miroir 5 ; 5', et qui s'étend jusqu'à l'ouverture de sortie 4. Les parois du conduit 20 ; 20', qui forment ces première et deuxième portions globalement tubulaires, sont opaques. Cela permet ainsi de canaliser la lumière émise par l'écran 11 dans un volume intérieur du conduit 20 ; 20' délimité par les parois de ces première et deuxième portions.

Le capteur 15 de rayonnement infrarouge est placé à l'extérieur du conduit 20 ; 20', c'est-à-dire hors de ce volume intérieur. On évite ainsi que le capteur ne reçoive de la lumière visible émise par l'écran. Cette disposition, de même que la présence d'un filtre optique 17 placé devant le capteur 15 pour éliminer la lumière visible résiduelle susceptible d'atteindre ce capteur, concoure à améliorer la fiabilité de la mesure de température de l'écran réalisée grâce au capteur.

Dans le premier mode de réalisation (figure 1), le capteur 15 de rayonnement infrarouge est placé à proximité de l'écran 11, plus près de l'écran que de l'ouverture de sortie 4. Une ouverture latérale 22, formée dans une paroi latérale 21 du conduit 20, permet alors à une partie du rayonnement infrarouge rayonné par l'écran 11 d'atteindre le capteur 15 (ce rayonnement infrarouge étant émis de manière presque omnidirectionnelle).

Le capteur 15 est disposé plus précisément de manière à ce que :
- un axe d'émission moyen, x_{E}, sur lequel est centrée la lumière visible émise par l'écran 11, et
- un axe de mesure xm, qui relie le centre du capteur 15 au centre de l'écran 11,
soient séparés l'un de l'autre par un angle α supérieur à 30 degrés.

Cette position hors axe du capteur 15 évite qu'il ne reçoive de la lumière visible provenant de l'écran 11.

Par ailleurs, le rayonnement infrarouge rayonné par la source de lumière 13 du dispositif de rétro-éclairage 12 se propage lui aussi, après l'écran 11, sous la forme d'un faisceau approximativement parallèle et centré sur l'axe d'émission moyen x_{E}, du fait de l'emploi du réflecteur 14. La position hors axe du capteur 15 permet donc d'éviter aussi que le rayonnement infrarouge émis par la source de lumière 13 n'atteigne le capteur 15. La fiabilité de la mesure de la température de l'écran 11 réalisée grâce au capteur 15 s'en trouve ainsi améliorée.

Le capteur 15, qui est disposé en retrait par rapport à la paroi latérale 21 dans laquelle est pratiquée l'ouverture latérale 22, occupe le fond d'une cavité 23 délimitée par une paroi 24 opaque. Cette paroi 24 protège le capteur d'éventuels rayonnements parasites qui pourraient être présents dans le boitier 2.

D'un côté de l'ouverture latérale 22 opposé à l'écran 11, la paroi 24 de la cavité 23 et la paroi latérale 21 se raccordent l'une à l'autre en formant entre elles un angle aigu β, compris par exemple entre 20 degrés et 60 degrés. Dans cette zone où elles se raccordent en formant l'angle aigu β, ces parois forment ainsi une sorte de surplomb qui s'interpose entre le capteur 15 et l'intérieur du conduit 20. Ce surplomb évite que de la lumière visible ou qu'un rayonnement infrarouge, provenant de l'extérieur du boitier 2 et entrant dans celui-ci par l'ouverture de sortie 4, n'atteigne le capteur 15.

Plus généralement, le capteur 15 est positionné ici hors d'une première zone d'éblouissement Z_{E}, qui est la zone qui serait couverte par un rayonnement infrarouge entrant dans le boitier 2 par son ouverture de sortie 4, avec une direction de propagation opposée à la direction de la lumière visible sortant du boitier 2. A supposer que les premier et deuxième miroirs 5 et 6 soient réfléchissant dans le domaine de l'infrarouge, cette première zone d'éblouissement Z_{E}, hachurée sur la figure 1, couvrirait ici l'ensemble du volume intérieur du conduit 20, mais ne couvrirait pas la cavité 23 où est logé le capteur 15.

L'afficheur 1 comprend par ailleurs le filtre optique 17 mentionné plus haut, disposé entre l'écran 11 et le capteur 15, le coefficient de transmission de ce filtre étant plus grand pour le rayonnement infrarouge auquel est sensible le capteur 15 que pour de la lumière visible. Pour plus de clarté, le filtre optique 17 et le capteur 15 sont représentés distinctement l'un de l'autre, sur la figure 1. Le filtre optique 17 peut néanmoins être intégré au capteur 15. Ce filtre optique 17 est tel que :
- une première valeur de transmission du filtre optique, égale à la valeur moyenne de son coefficient de transmission sur la bande de longueurs d'onde à laquelle est sensible le capteur 15 (bande de longueurs d'onde dont on rappelle qu'elle s'étend ici de 5,5 microns à 14 microns), est supérieure à
- une deuxième valeur de transmission du filtre optique, égale à la valeur moyenne de son coefficient de transmission sur le domaine du visible.

La première valeur de transmission est par exemple supérieure à 40%, voire à 60%. Quant à la deuxième valeur de transmission, elle est par exemple inférieure à 10%.

Dans le deuxième mode de réalisation (figure 2), au lieu d'être décalé latéralement par rapport à l'axe d'émission moyen, le capteur 15 est placé dans le prolongement de cet axe. Mais il est placé alors derrière le premier miroir 5', qui est au moins partiellement transparent dans la bande de longueurs d'onde mentionnée plus haut, à laquelle est sensible le capteur 15.

Ce miroir 5', qui est réfléchissant dans le domaine du visible, joue notamment le rôle du filtre optique 17 mentionné plus haut : il permet que le capteur 15 reçoive une partie du rayonnement infrarouge rayonné par l'écran 11, tout en évitant que de la lumière visible provenant de l'écran 11 n'atteigne le capteur 15. Ainsi, la valeur moyenne du coefficient de réflexion du premier miroir 5', sur le domaine du visible et pour l'incidence sous laquelle il est employé, est par exemple supérieure à 60%, voire supérieure à 80% (ce coefficient de réflexion peut par exemple être obtenu grâce à uns couche mince réfléchissante déposée sur l'une des faces du premier miroir 5'). Quant à la valeur moyenne de son coefficient de transmission, sur la bande de longueurs d'onde à laquelle est sensible le capteur 15, elle est par exemple supérieure à 40%, voire supérieure à 60%. Le substrat du premier miroir 5' peut par exemple être réalisé en Silicium ou en Germanium.

Le capteur 15 est placé à l'opposé de l'écran 11 par rapport au premier miroir 5'. Il est placé là aussi au fond d'une cavité 23' délimitée par une paroi 24'. Cette paroi 24' s'étend du capteur 15 jusqu'au premier miroir 5'.

Par ailleurs, dans ce deuxième mode de réalisation, le capteur 15 est positionné hors d'une deuxième zone d'éblouissement Z'_{E}. De manière comparable au premier mode de réalisation, cette deuxième zone d'éblouissement Z'_{E} est ici la zone qui serait couverte par un rayonnement infrarouge entrant dans le boitier 2 par son ouverture de sortie 4, avec une direction de propagation opposée à la direction de la lumière visible sortant du boitier 2 (sur la figure 2, cette zone est hachurée). A supposer que le deuxième miroir 6 soit réfléchissant dans le domaine de l'infrarouge, la deuxième zone d'éblouissement Z'_{E} couvre alors le volume intérieur de la deuxième portion du conduit 20, et se prolonge derrière le premier miroir 5' puisque celui-ci est partiellement transparent dans le domaine de l'infrarouge. Derrière le premier miroir 5', c'est-à-dire du côté de ce miroir opposé à l'écran 11, la deuxième zone d'éblouissement Z'_{E} occupe une région R qui s'étend, à partir du premier miroir 5', dans le prolongement de l'axe reliant le deuxième miroir 6 au premier miroir 5' (figure 2). Le capteur 15 est placé hors de cette région. On évite ainsi avantageusement qu'un rayonnement infrarouge provenant du soleil, potentiellement intense, n'atteigne le capteur 15.

Par ailleurs, le capteur 15 peut intégrer un filtre optique (non représenté), comparable au filtre optique du premier mode de réalisation, ce filtre permettant d'éviter qu'un résidu de lumière visible, qui aurait éventuellement pu traverser le premier miroir 5', n'atteigne la surface sensible du capteur.

Dans une variante de ce deuxième mode de réalisation, le capteur de rayonnement infrarouge pourrait être placé derrière le deuxième miroir, d'un côté du deuxième miroir opposé au premier miroir. Dans cette variante, le deuxième miroir serait alors au moins partiellement transparent pour la bande de longueur d'onde mentionnée plus haut, à laquelle le capteur de rayonnement infrarouge est sensible.

## Revendications

1. Afficheur tête haute (1 ; 1') comprenant un dispositif d'affichage (10 ; 10') comprenant : un écran (11) à cristaux liquides pour générer une image à afficher, un dispositif de rétro-éclairage (12) de l'écran (11), et un capteur (15), sensible à un rayonnement infrarouge rayonné par l'écran (11), et disposé de manière à capter une partie au moins de ce rayonnement, le dispositif d'affichage (10 ;10') comprenant en outre une unité électronique de pilotage (16) programmée pour déterminer la température de l'écran (11) à partir du rayonnement infrarouge rayonné par l'écran et mesuré par le capteur (15) et commander une puissance électrique (P_{E}) d'alimentation du dispositif de rétro-éclairage (12), en fonction d'un signal (s) électrique délivré par ledit capteur (15), de manière à ce qu'une température (T) de l'écran déduite dudit signal (s) reste inférieure à un seuil de température (T₁) donné, et comprenant un boitier (2) ayant une ouverture de sortie (4), l'écran (11) et le capteur (15) étant situés dans le boitier (2), la lumière visible émise par l'écran (11) pour afficher ladite image sortant du boitier (2) par ladite ouverture de sortie (4), et comprenant en outre un conduit (20 ; 20') qui s'étend de l'écran (11) à cristaux liquides jusqu'à l'ouverture de sortie (4) du boitier (2), une ouverture latérale (22) étant formée dans une paroi latérale (21) du conduit (20), et dans lequel le capteur (15) est disposé à l'extérieur du conduit (20), en retrait par rapport à ladite paroi latérale (21).

2. Afficheur tête haute (1 ; 1') selon la revendication 1, dans lequel l'unité électronique de pilotage (16) est programmée pour : lorsque la température (T) de l'écran déduite dudit signal (s) est supérieure audit seuil de température (T₁), commander alors une extinction du dispositif de rétroéclairage (12), et lorsque la température (T) de l'écran déduite dudit signal (s) est inférieure au seuil de température (T₁), commander alors la puissance électrique (P_{E}) d'alimentation du dispositif de rétroéclairage (12) de manière à ce qu'elle décroisse lorsque ladite température (T) approche du seuil de température (T₁).

3. Afficheur tête haute (1 ; 1') selon la revendication 2, dans lequel le seuil de température (T₁) est un seuil au-dessus duquel l'écran (11) est endommagé irréversiblement et en dessous duquel l'écran (11) n'est pas endommagé irréversiblement.

4. Afficheur tête haute (1 ; 1') selon l'une des revendications 1 à 3, dans lequel le capteur (15) est sensible au rayonnement infrarouge pour au moins une longueur d'onde comprise entre 6 microns et 14 microns.

5. Afficheur tête haute (1 ; 1') selon la revendication 4, comprenant en outre un filtre optique (17 ; 5') disposé sur le trajet suivi par ledit rayonnement infrarouge entre l'écran (11) et le capteur (15), dans lequel le coefficient de transmission de ce filtre optique (17 ; 5') a, pour ladite longueur d'onde comprise entre 6 microns et 14 microns, une valeur supérieure à la valeur moyenne de ce coefficient de transmission dans le domaine du visible.

6. Afficheur tête haute (1 ; 1') selon la revendication l'une quelconque des revendications précédentes dans lequel le capteur (15) est disposé au fond d'une cavité (23) délimitée par une paroi (24), cette cavité débouchant dans le conduit (20) par ladite ouverture latérale (22).

7. Afficheur tête haute (1) selon l'une quelconque des revendications précédentes dans lequel, la lumière produite par le dispositif de rétroéclairage (12) sortant de l'écran (11) sous la forme d'un faisceau lumineux centré sur un axe d'émission moyen (x_{E}), et dans lequel un axe de mesure (x_{M}), qui relie le capteur (15) à l'écran (11), est séparé dudit axe d'émission moyen (x_{E}) par un angle (α) supérieur à 30 degrés.

8. Afficheur tête haute (1') selon l'une quelconque des revendications 1 à 6, comprenant en outre un miroir (5'), disposé de manière à réfléchir la lumière visible émise par l'écran (11) lors de son trajet depuis l'écran (11) jusqu'à l'ouverture de sortie (4) du boitier (2), ce miroir (5') étant au moins partiellement transparent pour ledit rayonnement infrarouge capté par le capteur (15), ladite lumière visible se réfléchissant d'un côté du miroir (5') tandis que le capteur (15) est situé d'une autre côté du miroir (5').

9. Afficheur tête haute (1 ; 1') selon la revendication 8 dans la dépendance de la revendication 5, dans lequel ledit filtre optique est réalisé au moyen dudit miroir (5').

10. Afficheur tête haute (1 ; 1') selon l'une quelconque des revendications précédentes, dans lequelle capteur (15) est positionné hors d'une zone d'éblouissement (Z_{E} ; Z'_{E}), ladite zone d'éblouissement (Z_{E} ; Z'_{E}) étant la zone qui serait couverte par un rayonnement infrarouge entrant dans le boitier (2) par son ouverture de sortie (4) avec une direction de propagation opposée à la direction de la lumière visible sortant du boitier (2).

## Patentansprüche

1. Head-Up-Display (1; 1'), mit einer Anzeigevorrichtung (10; 10') umfassend: einen Flüssigkristallbildschirm (11) zum Generieren eines anzuzeigenden Bildes, eine Vorrichtung (12) zum Rückbeleuchten des Bildschirms (11), und einen Sensor (15), der auf eine Infrarotstrahlung anspricht, die von dem Bildschirm (11) abgestrahlt wird, und der derart angeordnet ist, dass er mindestens einen Teil dieser Strahlung aufnimmt, wobei die Anzeigevorrichtung (10; 10') ferner eine elektronische Ansteuerungseinheit (16) umfasst, die programmiert ist, um die Temperatur des Bildschirms (11) aus der Infrarotstrahlung, die von dem Bildschirm abgestrahlt und von dem Sensor (15) gemessen wird, zu bestimmen, und um eine elektrische Versorgungsleistung (P_{E}) der Rückbeleuchtungsvorrichtung (12) in Abhängigkeit von einem elektrischen Signal (s), das von dem Sensor (15) abgegeben wird, zu steuern, so dass eine Temperatur (T) des Bildschirms, die von dem Signal (s) abgeleitet wird, unter einer gegebenen Temperaturschwelle (T₁) bleibt, und umfassend ein Gehäuse (2), das eine Ausgangsöffnung (4) aufweist, wobei sich der Bildschirm (11) und der Sensor (15) in dem Gehäuse (2) befinden, wobei das sichtbare Licht, das von dem Bildschirm (11) emittiert wird, um das Bild anzuzeigen, das Gehäuse (2) über die Ausgangsöffnung (4) verlässt, und ferner umfassend eine Leitung (20; 20'), die sich von dem Flüssigkristallbildschirm (11) zu der Ausgangsöffnung (4) des Gehäuses (2) erstreckt, wobei eine seitliche Öffnung (22) in einer Seitenwand (21) der Leitung (20) gebildet ist, und wobei der Sensor (15) außerhalb der Leitung (20) gegenüber der Seitenwand (21) vertieft angeordnet ist.

2. Head-Up-Display (1; 1') nach Anspruch 1, wobei die elektronische Ansteuerungseinheit (16) programmiert ist zum: wenn die Temperatur (T) des Bildschirms, die von dem Signal (s) abgeleitet wird, größer als die Temperaturschwelle (T₁) ist, dann Steuern eines Ausschaltens der Rückbeleuchtungsvorrichtung (12), und wenn die Temperatur (T) des Bildschirms, die von dem Signal (s) abgeleitet wird, kleiner als die Schwellentemperatur (T₁) ist, dann Steuern der elektrischen Versorgungsleistung (P_{E}) der Rückbeleuchtungsvorrichtung (12), so dass sie abnimmt, wenn sich die Temperatur (T) der Schwellentemperatur (T₁) nähert.

3. Head-Up-Display (1; 1') nach Anspruch 2, wobei die Temperaturschwelle (T₁) eine Schwelle ist, oberhalb welcher der Bildschirm (11) unumkehrbar beschädigt wird und unterhalb welcher der Bildschirm (11) nicht unumkehrbar beschädigt wird.

4. Head-Up-Display (1; 1') nach einem der Ansprüche 1 à 3, wobei der Sensor (15) auf die Infrarotstrahlung bei mindestens einer Wellenlänge zwischen 6 Mikrometern und 14 Mikrometern anspricht.

5. Head-Up-Display (1; 1') nach Anspruch 4, ferner umfassend ein optisches Filter (17; 5'), das auf dem Weg angeordnet ist, den die Infrarotstrahlung zwischen dem Bildschirm (11) und dem Sensor (15) folgt, wobei der Durchlässigkeitsfaktor dieses optischen Filters (17; 5') für die Wellenlänge zwischen 6 Mikrometern und 14 Mikrometern einen Wert aufweist, der größer als der Mittelwert dieses Durchlässigkeitsfaktors im sichtbaren Bereich ist.

6. Head-Up-Display (1; 1') nach einem der vorhergehenden Ansprüche, wobei der Sensor (15) auf dem Boden eines Hohlraums (23) angeordnet ist, der von einer Wand (24) begrenzt ist, wobei dieser Hohlraum über die seitliche Öffnung (22) in die Leitung (20) mündet.

7. Head-Up-Display (1) nach einem der vorhergehenden Ansprüche, wobei das Licht, das von der Rückbeleuchtungsvorrichtung (12) erzeugt wird, aus dem Bildschirm (11) als ein Lichtstrahl austritt, der auf eine Emissionsmittelachse (x_{E}) zentriert ist, und wobei eine Messachse (x_{M}), die den Sensor (15) mit dem Bildschirm (11) verbindet, von der Emissionsmittelachse (x_{E}) durch einen Winkel (α) größer als 30 Grad getrennt ist.

8. Head-Up-Display (1') nach einem der Ansprüche 1 bis 6, ferner umfassend einen Spiegel (5'), der angeordnet ist, um das sichtbare Licht, das von dem Bildschirm (11) emittiert wird, auf seinem Weg von dem Bildschirm (11) zu der Ausgangsöffnung (4) des Gehäuses (2) zu reflektieren, wobei dieser Spiegel (5') mindestens teilweise für die Infrarotstrahlung durchlässig ist, die von dem Sensor (15) aufgenommen wird, wobei sich das sichtbare Licht auf einer Seite des Spiegels (5') reflektiert, während sich der Sensor (15) auf einer anderen Seite des Spiegels (5') befindet.

9. Head-Up-Display (1; 1') nach Anspruch 8 in Abhängigkeit von Anspruch 5, wobei das optische Filter anhand des Spiegels (5') ausgebildet ist.

10. Head-Up-Display (1; 1') nach einem der vorhergehenden Ansprüche, wobei der Sensor (15) außerhalb einer Blendzone (Z_{E}; Z'_{E}) angeordnet ist, wobei die Blendzone (Z_{E}; Z'_{E}) die Zone ist, die von einer Infrarotstrahlung abgedeckt würde, die in das Gehäuse (2) über seine Ausgangsöffnung (4) mit einer Ausbreitungsrichtung, die der Richtung des sichtbaren Lichts, das aus dem Gehäuse (2) austritt, entgegengesetzt ist, eintreten würde.

## Claims

1. Head-up display (1; 1') comprising a display device (10; 10') comprising: an LCD screen (11) for generating an image to be displayed, a back-lighting device (12) for the screen (11), and a sensor (15) sensitive to infrared radiation radiated by the screen (11) and disposed so as to detect at least some of this radiation, the display device (10; 10') further comprising an electronic control unit (16) programmed to determine the temperature of the screen (11) on the basis of the infrared radiation radiated by the screen and measured by the sensor (15) and control an electric power (P_{E}) for powering the back-lighting device (12) as a function of an electrical signal (s) delivered by said sensor (15), so that a temperature (T) of the screen derived from said signal (s) remains below a given temperature threshold (T₁), and comprising a casing (2) having an exit aperture (4), the screen (11) and the sensor (15) being located in the casing (2), with the visible light emitted by the screen (11) for displaying said image exiting the casing (2) via said exit aperture (4), and further comprising a conduit (20; 20'), which extends from the LCD screen (11) to the exit aperture (4) of the casing (2), with a lateral aperture (22) being formed in a lateral wall (21) of the conduit (20), and wherein the sensor (15) is disposed outside the conduit (20), set back relative to said lateral wall (21).

2. Head-up display (1; 1') according to Claim 1, wherein the electronic control unit (16) is programmed to: when the temperature (T) of the screen derived from said signal (s) is above said temperature threshold (T₁), then control the switching-off of the back-lighting device (12), and, when the temperature (T) of the screen derived from said signal (s) is below the temperature threshold (T₁), then control the electric power (P_{E}) for powering the back-lighting device (12) so that it decreases when said temperature (T) approaches the temperature threshold (T₁).

3. Head-up display (1; 1') according to Claim 2, wherein the temperature threshold (T₁) is a threshold above which the screen (11) is irreversibly damaged and below which the screen (11) is not irreversibly damaged.

4. Head-up display (1; 1') according to one of Claims 1 to 3, wherein the sensor (15) is sensitive to infrared radiation for at least one wavelength ranging between 6 microns and 14 microns.

5. Head-up display (1; 1') according to Claim 4, further comprising an optical filter (17; 5') disposed on the path followed by said infrared radiation between the screen (11) and the sensor (15), wherein the transmission coefficient of this optical filter (17; 5') has, for said wavelength ranging between 6 microns and 14 microns, a value that is greater than the average value of this transmission coefficient in the visible range.

6. Head-up display (1; 1') according to any one of the preceding claims, wherein the sensor (15) is disposed at the bottom of a cavity (23) defined by a wall (24), with this cavity emerging in the conduit (20) via said lateral aperture (22).

7. Head-up display (1) according to any one of the preceding claims, wherein the light produced by the back-lighting device (12) exits the screen (11) in the form of a light beam centred on an average emission axis (x_{E}), and wherein a measurement axis (x_{M}), which connects the sensor (15) to the screen (11), is separated from said average emission axis (x_{E}) by an angle (α) of more than 30 degrees.

8. Head-up display (1') according to any one of Claims 1 to 6, further comprising a mirror (5') disposed so as to reflect the visible light emitted by the screen (11) as it travels from the screen (11) to the exit aperture (4) of the casing (2), with this mirror (5') being at least partially transparent for said infrared radiation detected by the sensor (15), said visible light reflecting from one side of the mirror (5'), whereas the sensor (15) is located on another side of the mirror (5').

9. Head-up display (1; 1') according to Claim 8, when dependent on Claim 5, wherein said optical filter is produced by means of said mirror (5').

10. Head-up display (1; 1') according to any one of the preceding claims, wherein the sensor (15) is positioned outside a dazzling zone (Z_{E}; Z'_{E}), said dazzling zone (Z_{E}; Z'_{E}) being the zone that would be covered by infrared radiation entering the casing (2) via its exit aperture (4), with a propagation direction opposite the direction of the visible light exiting the casing (2).
